# EUROPÄISCHE PATENTSCHRIFT

(11) **EP 4 121 254 B1**
(45) Veröffentlichungstag und Bekanntmachung des Hinweises auf die Patenterteilung: **21.05.2025**
(21) Anmeldenummer: 21713637.3
(22) Anmeldetag: 18.03.2021
(51) Int. Cl.: B65G 47/90, B65G 51/28, B25J 9/04, B25J 15/08, B25J 21/00

(54) **VERFAHREN ZUM AUTOMATISCHEN BEFÜLLEN EINER TRANSPORTBÜCHSE UND MANIPULATORVORRICHTUNG**
METHOD FOR AUTOMATICALLY FILLING A TRANSPORT BOX AND MANIPULATOR DEVICE
PROCÉDÉ DE REMPLISSAGE AUTOMATIQUE D'UNE CAISSE DE TRANSPORT ET DISPOSITIF MANIPULATEUR

(30) Priorität: 19.03.2020 DE 102020203554
(43) Veröffentlichungstag der Anmeldung: 25.01.2023
(73) Patentinhaber: Swisslog Healthcare GmbH, 26655 Westerstede (DE)
(72) Erfinder: HARTMANN, Yanneck, 26655 Westerstede (DE)
(74) Vertreter: Oelke, Jochen
(86) Internationale Anmeldenummer: PCT/EP2021/056930
(87) Internationale Veröffentlichungsnummer: WO 2021/185958

(56) Entgegenhaltungen:
- FR-A1- 2 937 960
- US-B1- 6 477 442
- ING.SUMETZBERGER GMBH: "Fully Automated Hospital Pharmacy - Vollautomatische Krankenhausapotheke", 1 April 2015 (2015-04-01), pages 1 - 2, XP054981895, Retrieved from the Internet <URL:https://www.youtube.com/watch?v=rVEuIbYr7-4> [retrieved on 20210611]

## Beschreibung

Die Erfindung betrifft ein Verfahren zum automatischen Befüllen einer Transportbüchse mit einem Bund von Einzelwaren, die mittels eines Warenringes zu dem Bund zusammengefasst sind. Die Erfindung betrifft außerdem eine zugehörige Manipulatorvorrichtung.

Die EP 2 516 300 A1 beschreibt eine Vorrichtung mit einer Ladestation zum automatischen Befüllen von zylindrischen Kapseln mit Gegenständen, denen Adressen gegeben wurden. Die Kapseln sind für pneumatische Rohrtransportsysteme vorgesehen und weisen zwei zu öffnende Endstücke und einen Transponder mit lesbaren Informationen über die Identität jeder einzelnen Kapsel auf. Eine Ladestation umfasst eine Greifvorrichtung und eine Übertragungseinheit, über welche die Greifvorrichtung automatisch bewegt werden kann. Die Bewegung der Greifvorrichtung erfolgt relativ zu einer Kapsel zunächst in einer ersten Richtung durch die erste Endstücköffnung und die zweite Endstücköffnung der Kapsel hindurch. Der Gegenstand wird anschließen gegriffen und zwar über die zweite Endstücköffnung der Kapsel hindurch. In einer entgegen gesetzten Richtung wird der Gegenstand dann durch die zweite Endstücköffnung hindurch in die Kapsel gezogen. Danach kann die Greifvorrichtung den Gegenstand innerhalb der Kapsel freigeben und sich relativ zur Kapsel über die erste Endstücköffnung hinweg aus der Kapsel heraus bewegen.

Die EP 2 565 036 A1 beschreibt ein Verpackungsmaterial zur Herstellung von Verpackungen von Produkten, insbesondere pharmazeutischen oder medizinischen Produkten.

Die WO 2014/207507 A1 beschreibt einen Träger für ein Einzeldosis-Arzneimittel und umfasst einen relativ starren, planen Körper, der in einer ersten Richtung eine längliche Form aufweist und eine Dicke aufweist, die im Verhältnis zu einer Oberfläche relativ kleiner ist. Auf einem Teil der Oberfläche ist eine Aufnahme für ein Einzeldosis-Arzneimittel vorgesehen, wobei dieser Bereich relativ zu einer Mittellinie der Oberfläche quer zur ersten Hauptrichtung vollständig zu einer Seite verschoben ist. Außerdem ist ein Loch vorgesehen, um den Arzneimittelträger aufhängen zu können. Mehrere Einzeldosis-Arzneimittel können, ggf. zusammen mit anderen Einzelwaren mittels eines gemeinsamen Warenringes zu einem Bund zusammengefasst sein.

Das Werbevideo der Ing. Sumetzberger GmbH offenbart ein Verfahren nach dem Oberbegriff des Anspruchs 1. Das Video zeigt eine vollautomatisierte Krankenhausapotheke, in der eine Vorrichtung gezeigt wird, welche eine Transportbüchse mit einzelnen zu transportierenden Gegenständen befüllt, wobei die Gegenstände an einer Haltevorrichtung zusammengefasst sind.

Die US 6 477 442 B1 offenbart eine Manipulatorvorrichtung nach dem Oberbegriff des Anspruchs 5. Das Dokument zeigt eine Rohrpoststation, welche mittels robotischer Unterstützung die Büchsen entnimmt und belädt.

Aufgabe der Erfindung ist es, einen Bund von Einzelwaren, die mittels eines Warenringes zu dem Bund zusammengefasst sind, in einem automatisierten Verfahren auf einfache Weise und zuverlässig in eine Transportbüchse einbringen zu können.

Die Aufgabe wird erfindungsgemäß gelöst durch ein Verfahren zum automatischen Befüllen einer Transportbüchse mit einem Bund von Einzelwaren, die mittels eines Warenringes zu dem Bund zusammengefasst sind, aufweisend die Schritte:
- automatisches Greifen des Warenringes mittels eines Greifwerkzeugs einer automatisch ansteuerbaren Manipulatorvorrichtung, so dass der Warenring durch das Greifwerkzeug festgehalten ist,
- automatisches Bewegen des Greifwerkzeugs entlang eines ersten Bewegungspfades durch automatisches Ansteuern der Manipulatorvorrichtung derart, dass während des Haltens und Bewegens des Warenringes mittels des Greifwerkzeugs, die an dem Bund hängenden Einzelwaren über eine Rückhalteeinrichtung hinweggeführt werden, so dass sich die Einzelwaren entgegen der Bewegungsrichtung des Warenringes entlang des ersten Bewegungspfades ausrichten,
- anschließendes automatisches Einschieben des Bundes in die Transportbüchse mittels des Greifwerkzeugs entlang eines zweiten Bewegungspfades durch automatisches Ansteuern der Manipulatorvorrichtung derart, dass der Bund mit seinem Warenring voraus in die Transportbüchse eingeschoben wird und die an dem Bund zusammengefassten Einzelwaren dem Warenring in Bewegungsrichtung des Warenringes in die Transportbüchse hinein folgen, dadurch gekennzeichnet, dass das automatische Bewegen des Greifwerkzeugs entlang des ersten Bewegungspfades eine Schwenkbewegung um eine horizontale Schwenkachse oder um eine zumindest im Wesentlichen horizontale Schwenkachse ist, wobei der Warenring am Ende des ersten Bewegungspfades (P1) oberhalb einer geöffneten Öffnung der Transportbüchse positioniert ist.

Die Transportbüchse kann ein Behälter sein, der insbesondere zum Transport von Gegenständen oder Waren innerhalb einer Rohrpostanlage ausgebildet ist. Die zu transportierenden Gegenstände oder Waren können beliebiger Art sein. Die Rohrpostanlage kann beispielsweise innerhalb eines Logistikcenters, einer Produktionsanlage oder einer medizinischen Einrichtung, wie beispielsweise einem Krankenhaus, verwendet werden. Im Folgenden wird die Erfindung anhand einer Rohrpostanlage eines Krankenhauses beschrieben, wobei der Bund von Einzelwaren einen Zusammenfassung von beispielsweise als ein Anhänger mit personenbezogenen Daten, einem Blister-Einzelpack eines Medikaments, einem Probenbeutel und/oder einem weiteren Medikamentenbeutel sein kann. Speziell bei Probenbeuteln oder Blister-Einzelpacks eines Medikaments als repräsentative Beispiele ist eine besonders schonende Behandlung der Gegenständen oder Waren notwendig, so dass es nicht zu Beschädigung kommt. In eine Transportbüchse üblicher Bauart können beispielsweise bis zu drei Bunde an Einzelwaren, die jeweils an einem Warenring zusammengefasst sind, nacheinander in die Transportbüchse automatisch eingebracht werden.

Bei einem beispielshaften Ablauf wird eine leere Transportbüchse an eine Rohrpoststation gesendet, um dort ein oder mehrere Bunde von Einzelwaren, die mittels eines Warenringes zusammengefasst sind, abzuholen. Wenn die Transportbüchse in der Rohrpoststation angekommen ist, wird diese in einen Befüllungsposition gebracht. In der Befüllungsposition ist die Transportbüchse durch einen Halter festgehalten und positioniert. Die Transportbüchse kann in eine gewünschte Lage gedreht werden und ein oberer Deckel der Transportbüchse kann automatisch geöffnet werden, so dass eine Öffnung der Transportbüchse frei ist, um einen Bund in den Hohlraum der Transportbüchse automatisch einbringen zu können.

Jeder individuelle Bund ist in einer separaten Konfektionierungsvorrichtung individuell vorkonfektioniert und wird von dieser Konfektionierungsvorrichtung bereitgestellt. Der Arm der Manipulatorvorrichtung schwenkt heraus und in die Konfektionierungsvorrichtung hinein, um dort den jeweilig bereitgestellten vorkonfektionierten Bund mittels seines Greifwerkzeugs aufzunehmen. Das Greifwerkzeug ergreift den Bund automatisch, indem das Greifwerkzeug den Warenring fasst. Nun schenkt der Arm, d.h. auch das Greifwerkzeug zusammen mit dem vom Greifwerkzeug gehaltenen Bund in die Rohrpoststation hinein. Während des Einschwenkens gleiten die an dem Warenring hängenden Einzelwaren über eine Abweisekante hinweg und richten sich entsprechend aus. Am Ende der Schwenkbewegung ist der Warenring unmittelbar oberhalb der Öffnung der Transportbüchse angeordnet. Die Einzelwaren sind aufgrund der Abweisekante seitlich von der Öffnung der Transportbüchse weggeschwenkt. In einer linearen Bewegung nach unten wird der Warenring mittels des Greifwerkzeugs und des linear verstellbaren Vorderarms des Arms von oben nach unten in den Hohlraum der Transportbüchse eingeschoben. Die Einzelwaren folgen dieser linearen Bewegung des Warenringes nach und gleiten hinter dem Warenring in en Hohlraum der Transportbüchse hinein und zwar hinterher, nachdem der Warenring voran bereits in den Hohlraum der Transportbüchse eingebracht ist. In eine Transportbüchse üblicher Bauart können beispielsweise bis zu drei Bunde an Einzelwaren, die jeweils an einem Warenring zusammengefasst sind, nacheinander auf diese Weise in die Transportbüchse automatisch eingebracht werden.

Bei dem Verfahren kann das automatische Bewegen des Greifwerkzeugs entlang des ersten Bewegungspfades in Form der Schwenkbewegung um die horizontale Schwenkachse oder um die zumindest im Wesentlichen horizontale Schwenkachse derart ausgeführt werden, dass in einer Anfangssequenz des ersten Bewegungspfades die an dem Warenring zusammengefassten Einzelwaren aufgrund der Schwerkraft vertikal nach unten hängen und in einer Endsequenz des ersten Bewegungspfades die an dem Warenring zusammengefassten Einzelwaren mittels der Rückhalteeinrichtung in eine horizontale Ausrichtung oder in eine zumindest im Wesentlichen horizontale Ausrichtung gebracht werden, bevor der Warenring entlang des zweiten Bewegungspfades in die Transportbüchse eingeschoben wird.

Bei dem Verfahren kann das automatische Einschieben des Bundes in die Transportbüchse entlang des zweiten Bewegungspfades eine vertikale Schubbewegung oder eine zumindest im Wesentlichen vertikale Schubbewegung sein, wobei die Transportbüchse mit ihrer geöffneten Öffnung unterhalb des Warenringes derart angeordnet ist, dass der Warenring zusammen mit dem Greifwerkzeug über die geöffneten Öffnung der Transportbüchse hinweg in den Hohlraum der Transportbüchse nach unten entgegen der Schwerkraftrichtung eingeschoben wird und die an dem Bund zusammengefassten Einzelwaren dem Warenring in der nach unten gerichteten Bewegungsrichtung des Warenringes in die Transportbüchse hinein folgen.

Bei dem Verfahren kann das automatische Einschieben des Bundes in die Transportbüchse entlang des zweiten Bewegungspfades derart erfolgen, dass der Warenring bei Erreichen eines Restabstandes zu einer der Öffnung der Transportbüchse gegenüberliegenden Bodenwand der Transportbüchse von dem Greifwerkzeug gelöst wird, noch bevor der automatisch zugeführte und vom Greifwerkzeug gehaltene Warenring die Bodenwand der Transportbüchse berührt.

Die Aufgabe wird außerdem gelöst durch eine Manipulatorvorrichtung, aufweisend ein Greifwerkzeug, das ausgebildet ist zum Aufnehmen eines Warenringes eines Bundes von Einzelwaren in einem geöffneten Zustand des Greifwerkzeugs und zum Halten des Warenringes des Bundes von Einzelwaren an dem Greifwerkzeug in einem geschlossenen Zustand des Greifwerkzeugs, und aufweisend einen Arm mit einem automatisch schwenkbar gelagerten Grundarm und mit einem am Grundarm automatisch linear verstellbar gelagerten Vorderarm, der das Greifwerkzeug aufweist, aufweisend einen stationären Halter zum Festhalten einer Transportbüchse in einer vertikalen Orientierung, in der eine Öffnung der Transportbüchse nach oben hin offen angeordnet ist, und aufweisend eine in der Öffnungsebene der Öffnung liegende oder zumindest im Wesentlichen in der Öffnungsebene der Öffnung liegende Abweisekante, welche ausgebildet ist, die an dem Bund hängenden Einzelwaren entgegen einer Bewegungsrichtung des Warenringes entlang eines ersten Bewegungspfades auszurichten, während der Warenring mittels des Greifwerkzeugs über die Abweisekante hinweg an die Öffnung der Transportbüchse herangeführt wird, dadurch gekennzeichnet, dass die Abweisekante einen zumindest im Wesentlichen in Art einer Passante zur Öffnung der Transportbüchse (4) ausgerichteten Mittenabschnitt aufweist, der von zwei gegenüberliegenden Randabschnitten begrenzt wird, wobei die beiden Randabschnitte in ihrem gegenseitigen Abstand voneinander stetig erweiternd sich von dem Mittenabschnitt entgegen der Zuführbewegung der Einzelwaren des Bundes an die Öffnung der Transportbüchse wegerstrecken.

Der Vorderarm trägt das Greifwerkzeug. Zum Schwenken des Grundarms kann dieser an einer Welle eines insbesondere pneumatisch antriebbaren Schwenkmotors befestigt sein. Um den Vorderarm linear verstellbar an dem Grundarm zu lagern, kein ein Pneumatikzylinder vorgesehen sein. Über beispielsweise eine gewendelte Druckluftzuleitung kann Druckluft an das Greifwerkzeug zugeführt werden, um das Greifwerkzeug beispielsweise druckluftbetätigt automatisch öffnen und schließen zu können. Das Greifwerkzeug kann eine erste Greiferbacke und eine zweite Greiferbacke aufweisen. Jede Greiferbacke kann einen Vorsprung aufweisen, wobei die Vorsprünge ausgebildet sein können, in einer geschlossenen Stellung der Greiferbacken den Warenring formschlüssig zu umgreifen. Die Vorsprünge können frei von Hinterschneidungen ausgebildet sein, so dass bei geöffneten Greiferbacken ein bisher gehaltener und dann losgelassener Warenring mittels Schwerkrafteinfluss sich leicht von den Greiferbacken lösen kann.

Bei der Manipulatorvorrichtung kann die Abweisekante zumindest im Wesentlichen in Art einer Passante zur Öffnung der Transportbüchse ausgerichtet angeordnet sein. Dies bedeutet, dass die Abweisekante mit ihrer Längserstreckung sich in der Ebene der Öffnung der Transportbüchse erstrecken kann. In dieser Lage der Abweisekante kann diese vorzugsweise rechtwinkelig zu einem Radius der vorzugsweise kreisförmigen Öffnung der Transportbüchse orientiert angeordnet sein.

Die Abweisekante weist einen zumindest im Wesentlichen in Art einer Passante zur Öffnung der Transportbüchse ausgerichteten Mittenabschnitt auf, der von zwei gegenüberliegenden Randabschnitten begrenzt wird, wobei die beiden Randabschnitte in ihrem gegenseitigen Abstand voneinander stetig erweiternd sich von dem Mittenabschnitt entgegen der Zuführbewegung der Einzelwaren des Bundes an die Öffnung der Transportbüchse wegerstrecken. Die beiden Randabschnitte können somit eine V-förmige Zentrierung bilden, aufgrund der die Einzelwaren zentriert ausgerichtet werden und zwar alleine durch die Bewegung des Greifwerkzeugs mit dem daran gehaltenen Warenring.

Die Manipulatorvorrichtung kann in allen Ausführungsformen eine Sensoreinrichtung aufweisen, die ausgebildet ist, die Öffnungsebene der Öffnung der Transportbüchse dahingehend zu überwachen, ob sich ein oder mehrere Einzelwaren eines in die Transportbüchse eingeschobenen Bundes noch in der Öffnungsebene der Öffnung der Transportbüchse befinden.

Die Sensoreinrichtung kann beispielsweise in Art einer Lichtschranke, eines Laserscanners, eines optischen Sensors wie beispielsweise eine Kamera oder in Art eines Nahfeldsensors ausgebildet sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer Rohrpoststation, die zum Transportieren von Transportbüchsen ausgebildet ist,
- Fig. 2: eine Seitenansicht auf die Rohrpoststation gemäß Fig. 1 mit Blick auf eine erfindungsgemäße Manipulatorvorrichtung,
- Fig. 3: die Rohrpoststation gemäß Fig. 1 und Fig. 2 in einer Frontansicht mit horizontal herausgeschwenktem Arm,
- Fig. 4: die Rohrpoststation gemäß Fig. 1 und Fig. 2 in einer Frontansicht mit vertikal hereingeschwenktem Arm,
- Fig. 5: eine Seitenansicht auf die erfindungsgemäße Manipulatorvorrichtung in Alleinstellung,
- Fig. 6: die erfindungsgemäße Manipulatorvorrichtung gemäß Fig. 5 in Alleinstellung von vorne,
- Fig. 7: eine Ansicht eines beispielhaften Bundes von Einzelwaren, die mittels eines Warenringes zu dem Bund zusammengefasst sind,
- Fig. 8 bis 10: eine schematische Darstellung einer Sequenz entlang des ersten Bewegungspfades für den vom Greifwerkzeug geführten Bund von Einzelwaren,
- Fig. 11 bis 13: eine schematische Darstellung einer Sequenz entlang des zweiten Bewegungspfades für den vom Greifwerkzeug geführten Bund von Einzelwaren, und
- Fig. 14: eine vertikale Draufsicht von oben auf die Öffnung der Transportbüchse zusammen mit der Abweisekante.

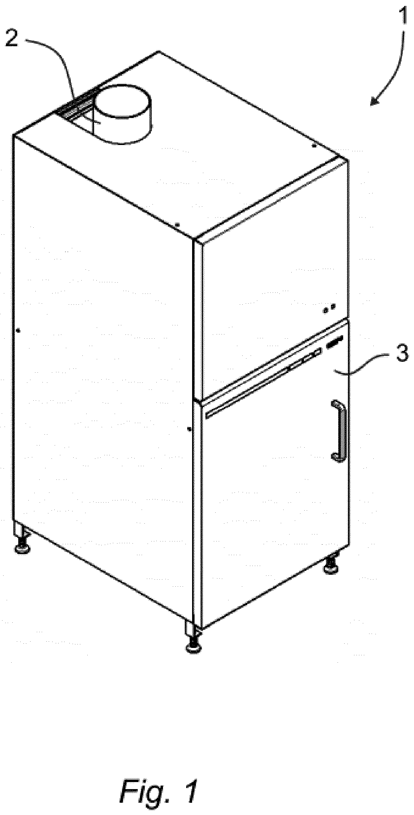

In der Fig. 1 ist eine beispielhafte Rohrpoststation 1 dargestellt. Diese Rohrpoststation 1 kann Teile einer nicht näher gezeigten Rohrpostanlage mit mehreren Rohrpoststationen 1 sein. Über einen Anschlussstutzen 2 ist die Rohrpoststation 1 an ein Rohrleitungsnetz der Rohrpostanlage angeschlossen. Über eine Tür 3 kann ein Zugang in das Innere der Rohrpoststation 1 geschaffen werden, beispielsweise zur manuellen Entnahme oder zur manuellen Eingabe einer Transportbüchse 4.

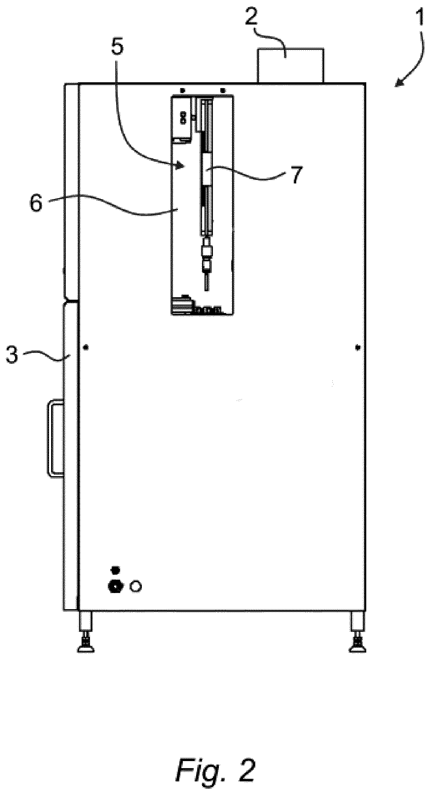

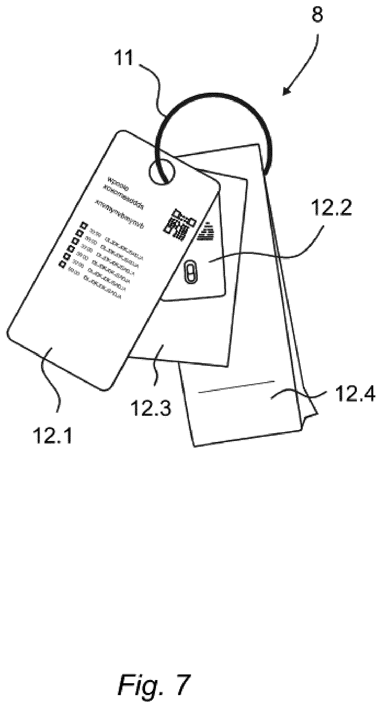

Wie aus Fig. 2 ersichtlich ist innerhalb der beispielshaften Rohrpoststation 1 eine erfindungsgemäße Manipulatorvorrichtung 5 angeordnet. Über einen Fensterausschnitt 6 kann ein Arm 7 der Manipulatorvorrichtung 5 aus dem Inneren der Rohrpoststation 1 herausgeschwenkt werden, beispielsweise um einen Bund 8 (Fig. 7) automatisch von außerhalb der Rohrpoststation 1 in das Innere der Rohrpoststation 1 verbringen zu können.

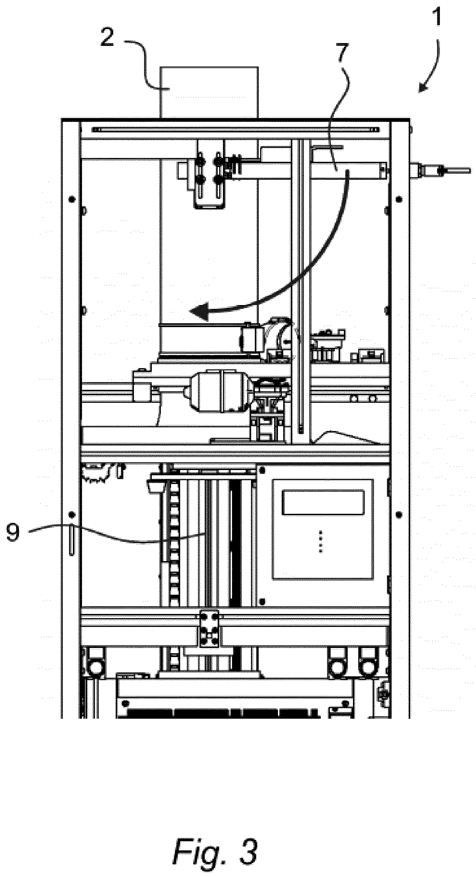

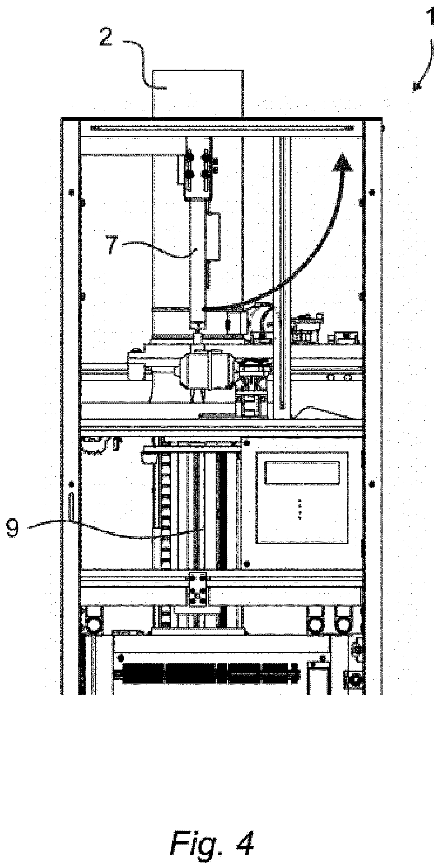

Die Rohrpoststation 1 umfasst einen stationären Halter 9 zum Festhalten einer Transportbüchse 4, wenn sie an der Rohrpoststation 1 angekommen ist. Oberhalb des stationären Halters 9 ist der Arm 7 der Manipulatorvorrichtung 5 innerhalb der Rohrpoststation 1 angeordnet, wie dies in Fig. 3 und Fig. 4 ersichtlich ist.

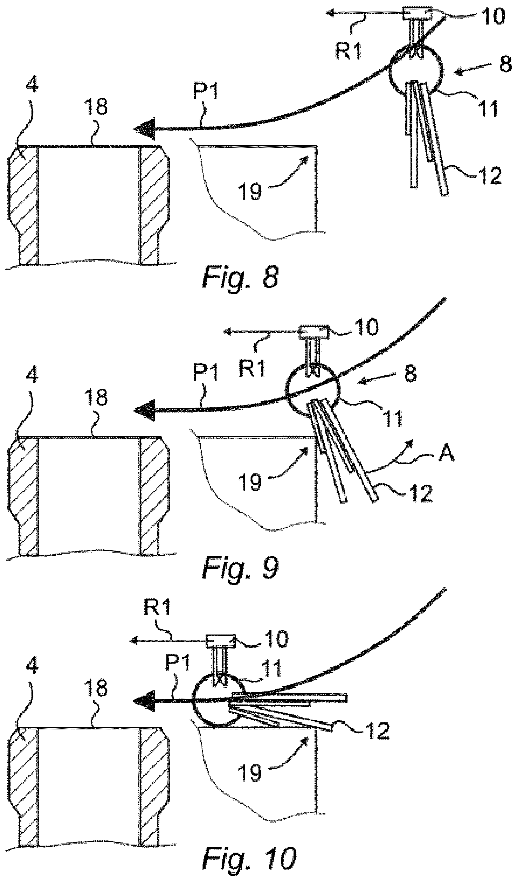

In seiner herausgeschwenkten Orientierung ist der Arm 7 horizontal ausgerichtet, wie dies in Fig. 3 dargestellt ist, so dass ein Bund 8 von außerhalb der Rohrpoststation 1 automatisch von einem Greifwerkzeug 10 des Arms 7 erfasst werden kann. Anschließend schwenkt der Arm 7 in eine vertikale Orientierung in die Rohrpoststation 1 wieder hinein. Während des Schwenkvorgangs des Arms 7 erfolgt automatisch ein Umorientieren der Einzelwaren 12.1, 12.2, 12.3, 12.4, wie dies in der Abfolge von Fig. 8 bis Fig. 13 dargestellt ist.

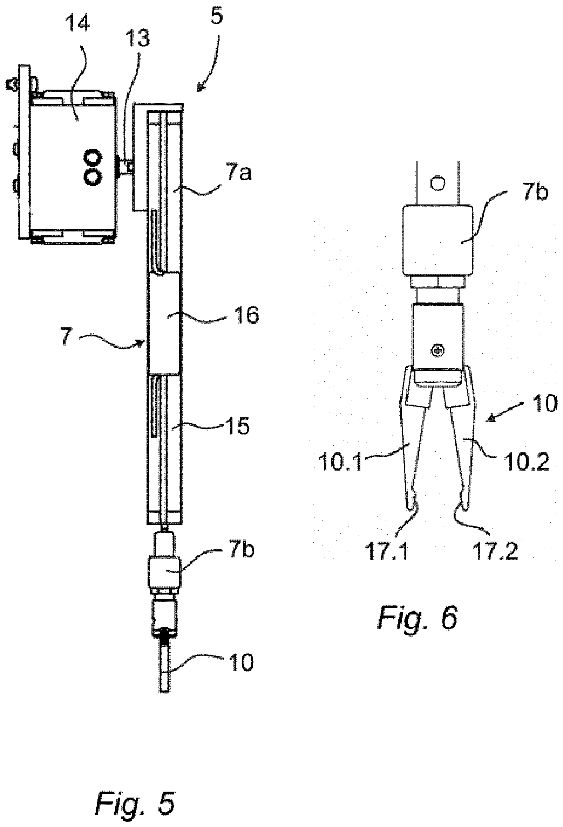

Die Fig. 5 und die Fig. 6 zeigen die Manipulatorvorrichtung 5 jeweils in einer Alleinstellung. Die Manipulatorvorrichtung 5 weist ein Greifwerkzeug 10 auf, das ausgebildet ist zum Aufnehmen eines Warenringes 11 eines Bundes 8 von Einzelwaren 12.1, 12.2, 12.3, 12.4 in einem geöffneten Zustand des Greifwerkzeugs 10 und zum Halten des Warenringes 11 des Bundes 8 von Einzelwaren 12.1, 12.2, 12.3, 12.4 an dem Greifwerkzeug 10 in einem geschlossenen Zustand des Greifwerkzeugs 10. Der Bund 8 mit dem Warenring 11 und den daran eingehängten Einzelwaren 12.1, 12.2, 12.3, 12.4 ist anhand eines konkreten Ausführungsbeispiels in Fig. 7 in Alleinstellung gezeigt. Im Falle eines konkreten Ausführungsbeispiels sind die Einzelwaren 12.1, 12.2, 12.3, 12.4 beispielsweise als ein Anhänger mit personenbezogenen Daten (12.1), einem Blister-Einzelpack eines Medikaments (12.2), einem Probenbeutel (12.3) und einem weiteren Medikamentenbeutel (12.4) versehen.

Die Manipulatorvorrichtung 5 gemäß Fig. 5 und Fig. 6 weist im dargestellten Ausführungsbeispiel den Arm 7 auf. Der Arm 7 umfasst einen automatisch schwenkbar gelagerten Grundarm 7a und einem am Grundarm 7a automatisch linear verstellbar gelagerten Vorderarm 7b auf. Der Vorderarm 7b trägt das Greifwerkzeug 10. Zum Schwenken der Grundarms 7a ist dieser an einer Welle 13 eines insbesondere pneumatisch antriebbaren Schwenkmotors 14 befestigt. Um den Vorderarm 7b linear verstellbar an dem Grundarm 7a zu lagern, ist ein Pneumatikzylinder 15 vorgesehen. Über eine gewendelte Druckluftzuleitung 16 wird Druckluft an das Greifwerkzeug 10 zugeführt, um das Greifwerkzeug 10 druckluftbetätigt automatisch öffnen und schließen zu können. Das Greifwerkzeug 10 kann eine erste Greiferbacke 10.1 und eine zweite Greiferbacke 10.2 aufweisen. Jede Greiferbacke 10.1, 10.2 kann einen Vorsprung 17.1, 17.2 aufweisen, wobei die Vorsprünge 17.1, 17.2 ausgebildet sind, in einer geschlossenen Stellung der Greiferbacken 10.1, 10.2 den Warenring 11 formschlüssig umgreifen zu können. Die Vorsprünge 17.1, 17.2 können frei von Hinterschneidungen ausgebildet sein, so dass bei geöffneten Greiferbacken 10.1, 10.2 ein bisher gehaltener Warenring 11 mittels Schwerkrafteinfluss sich leicht von den Greiferbacken 10.1, 10.2 lösen kann.

Die Fig. 8 bis Fig. 13 zeigen jeweils eine von dem stationären Halter 9 (Fig. 3) festgehaltene Transportbüchse 4. Die Transportbüchse 4 ist in einer vertikalen Orientierung festgehalten und ein nicht näher dargestellter Deckel der Transportbüchse 4 ist geöffnet, so dass eine Öffnung 18 der Transportbüchse 4 nach oben hin offen angeordnet ist.

Die Manipulatorvorrichtung 5 umfasst außerdem eine in der Öffnungsebene der Öffnung 18 liegende oder zumindest im Wesentlichen in der Öffnungsebene der Öffnung 18 liegende Abweisekante 19, welche ausgebildet ist, die an dem Bund 8 hängenden Einzelwaren 12.1, 12.2, 12.3, 12.4 entgegen einer Bewegungsrichtung R1 des Warenringes 11 entlang eines ersten Bewegungspfades P1 auszurichten, während der Warenring 11 mittels des Greifwerkzeugs 10 über die Abweisekante 19 hinweg an die Öffnung 18 der Transportbüchse 4 herangeführt wird.

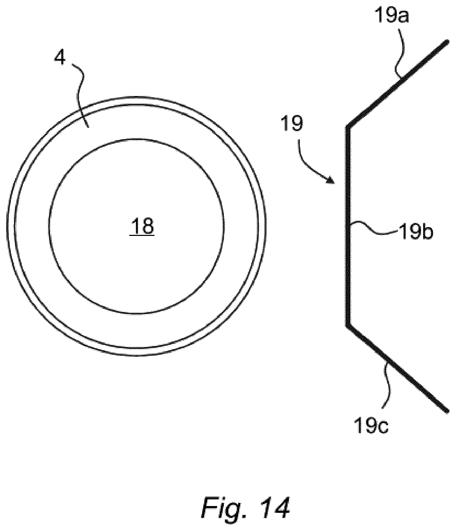

Wie aus Fig. 14 ersichtlich ist, kann in einer speziellen Ausführungsform die Abweisekante 19 zumindest im Wesentlichen in Art einer Passante zur Öffnung 18 der Transportbüchse 4 ausgerichtet angeordnet sein. Die Öffnung 18 der Transportbüchse 4 kann demgemäß vorzugsweise eine Kreisöffnung sein.

Die Abweisekante 19 kann, wie in Fig. 14 dargestellt ist, einen zumindest im Wesentlichen in Art einer Passante zur Öffnung der Transportbüchse 4 ausgerichteten Mittenabschnitt 19b aufweisen, der von zwei gegenüberliegenden Randabschnitten 19a und 19c begrenzt wird, wobei die beiden Randabschnitte 19a, 19c in ihrem gegenseitigen Abstand voneinander stetig erweiternd sich von dem Mittenabschnitt 19b entgegen der Zuführbewegung (erster Bewegungspfad P1) der Einzelwaren 12.1, 12.2, 12.3, 12.4 bzw. des gesamten Bundes 8 an die Öffnung 18 der Transportbüchse 4 wegerstrecken.

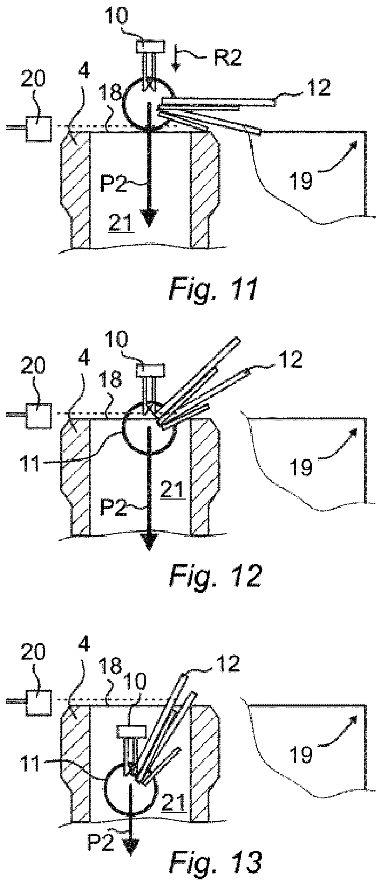

Die Manipulatorvorrichtung 5 kann eine Sensoreinrichtung 20 aufweisen (siehe Fig. 11 bis Fig. 13), die ausgebildet ist, die Öffnungsebene der Öffnung 18 der Transportbüchse 4 dahingehend zu überwachen, ob sich ein oder mehrere Einzelwaren 12.1, 12.2, 12.3, 12.4 eines in die Transportbüchse 4 eingeschobenen Bundes 8 noch in der Öffnungsebene der Öffnung 18 der Transportbüchse 4 befinden. Die Sensoreinrichtung 20 kann beispielsweise in Art einer Lichtschranke, eines Laserscanners, eines optischen Sensors wie beispielsweise eine Kamera oder in Art eines Nahfeldsensors ausgebildet sein.

Das erfindungsgemäße Verfahren ist nun anhand der Fig. 8 bis Fig. 13 in Form eines beispielhaften möglichen Ablaufs erläutert.

Zuerst erfolgt ein automatisches Greifen des Warenringes 11 mittels des Greifwerkzeugs 10 der automatisch ansteuerbaren Manipulatorvorrichtung 5, so dass der Warenring 11 durch das Greifwerkzeug 10 festgehalten ist (Fig. 8).

Sodann erfolgt ein automatisches Bewegen des Greifwerkzeugs 10 in Bewegungsrichtung R1 entlang des ersten Bewegungspfades P1 durch automatisches Ansteuern der Manipulatorvorrichtung 5 derart, dass während des Haltens und Bewegens des Warenringes 11 mittels des Greifwerkzeugs 10, die an dem Bund 8 hängenden Einzelwaren 12.1, 12.2, 12.3, 12.4 über die Rückhalteeinrichtung 19 hinweggeführt werden, so dass sich die Einzelwaren 12.1, 12.2, 12.3, 12.4 entgegen der Bewegungsrichtung R1 des Warenringes 11 entlang des ersten Bewegungspfades P1 in Form einer Ausrichtbewegung A ausrichten (Fig. 9, Fig. 10, Fig. 11).

Anschließend erfolgt ein automatisches Einschieben des Bundes 8 in die Transportbüchse 4 mittels des Greifwerkzeugs 10 entlang eines zweiten Bewegungspfades P2 durch automatisches Ansteuern der Manipulatorvorrichtung 5 derart, dass der Bund 8 mit seinem Warenring 11 voraus in die Transportbüchse 4 eingeschoben wird (Fig. 12) und die an dem Bund 8 zusammengefassten Einzelwaren 12.1, 12.2, 12.3, 12.4 dem Warenring 11 in Bewegungsrichtung R2 des Warenringes 11 in die Transportbüchse 4 hinein folgen.

Das automatische Bewegen des Greifwerkzeugs 10 entlang des ersten Bewegungspfades P1 kann eine Schwenkbewegung um eine horizontale Schwenkachse oder eine zumindest im Wesentlichen horizontale Schwenkachse sein, wobei der Warenring 11 am Ende des ersten Bewegungspfades P1 oberhalb der geöffneten Öffnung 18 der Transportbüchse 4 positioniert ist.

Das automatische Bewegen des Greifwerkzeugs 10 entlang des ersten Bewegungspfades P1 in Form der Schwenkbewegung um die horizontale Schwenkachse oder die zumindest im Wesentlichen horizontale Schwenkachse kann derart ausgeführt werden, dass in einer Anfangssequenz des ersten Bewegungspfades P1 die an dem Warenring 11 zusammengefassten Einzelwaren 12.1, 12.2, 12.3, 12.4 aufgrund der Schwerkraft zunächst vertikal nach unten hängen (Fig. 8) und in einer Endsequenz des ersten Bewegungspfades P1 die an dem Warenring 11 zusammengefassten Einzelwaren 12.1, 12.2, 12.3, 12.4 mittels der Rückhalteeinrichtung 19 in eine horizontale Ausrichtung (Fig. 10, Fig. 11) oder in eine zumindest im Wesentlichen horizontale Ausrichtung gebracht werden, bevor der Warenring 11 entlang des zweiten Bewegungspfades P2 in die Transportbüchse 4 eingeschoben wird (Fig. 11).

Das automatische Einschieben des Bundes 8 in die Transportbüchse 4 erfolgt, wie in Fig. 12 und Fig. 13 dargestellt ist, entlang des zweiten Bewegungspfades P2 in einer vertikalen Schubbewegung oder einer zumindest im Wesentlichen vertikalen Schubbewegung, wobei die Transportbüchse 4 mit ihrer geöffneten Öffnung 18 unterhalb des Warenringes 11 derart angeordnet ist, dass der Warenring 11 zusammen mit dem Greifwerkzeug 10 über die geöffneten Öffnung 18 der Transportbüchse 4 hinweg in den Hohlraum 21 der Transportbüchse 4 nach unten entgegen der Schwerkraftrichtung eingeschoben wird und die an dem Bund 8 zusammengefassten Einzelwaren 12.1, 12.2, 12.3, 12.4 dem Warenring 11 in der nach unten gerichteten Bewegungsrichtung R2 des Warenringes 11 in die Transportbüchse 4 hinein folgen.

Das automatische Einschieben des Bundes 8 in die Transportbüchse 4 entlang des zweiten Bewegungspfades P2 kann derart erfolgen, dass der Warenring 11 bei Erreichen eines Restabstandes zu einer der Öffnung 18 der Transportbüchse 4 gegenüberliegenden Bodenwand der Transportbüchse 4 von dem Greifwerkzeug 10 gelöst wird, noch bevor der automatisch zugeführte und vom Greifwerkzeug 10 gehaltene Warenring 11 die Bodenwand der Transportbüchse 4 berührt.

## Patentansprüche

1. Verfahren zum automatischen Befüllen einer Transportbüchse (4) mit einem Bund (8) von Einzelwaren (12.1, 12.2, 12.3, 12.4) die mittels eines Warenringes (11) zu dem Bund (8) zusammengefasst sind, aufweisend die Schritte:
- automatisches Greifen des Warenringes (11) mittels eines Greifwerkzeugs (10) einer automatisch ansteuerbaren Manipulatorvorrichtung (5), so dass der Warenring (11) durch das Greifwerkzeug (10) festgehalten ist,
- automatisches Bewegen des Greifwerkzeugs (10) entlang eines ersten Bewegungspfades (P1) durch automatisches Ansteuern der Manipulatorvorrichtung (5) derart, dass während des Haltens und Bewegens des Warenringes (11) mittels des Greifwerkzeugs (10), die an dem Bund (8) hängenden Einzelwaren (12.1, 12.2, 12.3, 12.4) über eine Rückhalteeinrichtung (19) hinweggeführt werden, so dass sich die Einzelwaren (12.1, 12.2, 12.3, 12.4) entgegen der Bewegungsrichtung (R1) des Warenringes (11) entlang des ersten Bewegungspfades (P1) ausrichten,
- anschließendes automatisches Einschieben des Bundes (8) in die Transportbüchse (4) mittels des Greifwerkzeugs (10) entlang eines zweiten Bewegungspfades (P2) durch automatisches Ansteuern der Manipulatorvorrichtung (5) derart, dass der Bund (8) mit seinem Warenring (11) voraus in die Transportbüchse (4) eingeschoben wird und die an dem Bund (8) zusammengefassten Einzelwaren (12.1, 12.2, 12.3, 12.4) dem Warenring (11) in Bewegungsrichtung (R2) des Warenringes (11) in die Transportbüchse (4) hinein folgen,
**dadurch gekennzeichnet, dass** das automatische Bewegen des Greifwerkzeugs (10) entlang des ersten Bewegungspfades (P1) eine Schwenkbewegung um eine horizontale Schwenkachse oder um eine zumindest im Wesentlichen horizontale Schwenkachse ist, wobei der Warenring (11) am Ende des ersten Bewegungspfades (P1) oberhalb einer geöffneten Öffnung (18) der Transportbüchse (4) positioniert ist.

2. Verfahren nach Anspruch 1, **dadurch gekennzeichnet, dass** das automatische Bewegen des Greifwerkzeugs (10) entlang des ersten Bewegungspfades (P1) in Form der Schwenkbewegung um die horizontale Schwenkachse oder um die zumindest im Wesentlichen horizontale Schwenkachse derart ausgeführt wird, dass in einer Anfangssequenz des ersten Bewegungspfades (P1) die an dem Warenring (11) zusammengefassten Einzelwaren (12.1, 12.2, 12.3, 12.4) aufgrund der Schwerkraft vertikal nach unten hängen und in einer Endsequenz des ersten Bewegungspfades (P1) die an dem Warenring (11) zusammengefassten Einzelwaren (12.1, 12.2, 12.3, 12.4) mittels der Rückhalteeinrichtung (19) in eine horizontale Ausrichtung oder in eine zumindest im Wesentlichen horizontale Ausrichtung gebracht werden, bevor der Warenring (11) entlang des zweiten Bewegungspfades (P2) in die Transportbüchse (4) eingeschoben wird.

3. Verfahren nach einen der Ansprüche 1 bis 2, **dadurch gekennzeichnet, dass** das automatische Einschieben des Bundes (8) in die Transportbüchse (4) entlang des zweiten Bewegungspfades (P2) eine vertikale Schubbewegung oder eine zumindest im Wesentlichen vertikale Schubbewegung ist, wobei die Transportbüchse (4) mit ihrer geöffneten Öffnung (18) unterhalb des Warenringes (11) derart angeordnet ist, dass der Warenring (11) zusammen mit dem Greifwerkzeug (10) über die geöffneten Öffnung (18) der Transportbüchse (4) hinweg in den Hohlraum (21) der Transportbüchse (4) nach unten entgegen der Schwerkraftrichtung eingeschoben wird und die an dem Bund (8) zusammengefassten Einzelwaren (12.1, 12.2, 12.3, 12.4) dem Warenring (11) in der nach unten gerichteten Bewegungsrichtung (R2) des Warenringes (11) in die Transportbüchse (4) hinein folgen.

4. Verfahren nach einen der Ansprüche 1 bis 3, **dadurch gekennzeichnet, dass** das automatische Einschieben des Bundes (8) in die Transportbüchse (4) entlang des zweiten Bewegungspfades (P2) derart erfolgt, dass der Warenring (11) bei Erreichen eines Restabstandes zu einer der Öffnung (18) der Transportbüchse (4) gegenüberliegenden Bodenwand der Transportbüchse (4) von dem Greifwerkzeug (10) gelöst wird, noch bevor der automatisch zugeführte und vom Greifwerkzeug (10) gehaltene Warenring (11) die Bodenwand der Transportbüchse (4) berührt.

5. Manipulatorvorrichtung, aufweisend ein Greifwerkzeug (10), das ausgebildet ist zum Aufnehmen eines Warenringes (11) eines Bundes (8) von Einzelwaren (12.1, 12.2, 12.3, 12.4) in einem geöffneten Zustand des Greifwerkzeugs (10) und zum Halten des Warenringes (11) des Bundes (8) von Einzelwaren (12.1, 12.2, 12.3, 12.4) an dem Greifwerkzeug (10) in einem geschlossenen Zustand des Greifwerkzeugs (10), und aufweisend einen Arm (7) mit einem automatisch schwenkbar gelagerten Grundarm (7a) und mit einem am Grundarm (7a) automatisch linear verstellbar gelagerten Vorderarm (7b), der das Greifwerkzeug (10) aufweist, aufweisend einen stationären Halter (9) zum Festhalten einer Transportbüchse (4) in einer vertikalen Orientierung, in der eine Öffnung (18) der Transportbüchse (4) nach oben hin offen angeordnet ist, und aufweisend eine in der Öffnungsebene der Öffnung (18) liegende oder zumindest im Wesentlichen in der Öffnungsebene der Öffnung (18) liegende Abweisekante (19), welche ausgebildet ist, die an dem Bund (8) hängenden Einzelwaren (12.1, 12.2, 12.3, 12.4) entgegen einer Bewegungsrichtung (R1) des Warenringes (11) entlang eines ersten Bewegungspfades (P1) auszurichten, während der Warenring (11) mittels des Greifwerkzeugs (10) über die Abweisekante (19) hinweg an die Öffnung (18) der Transportbüchse (4) herangeführt wird, **dadurch gekennzeichnet, dass** die Abweisekante (19) einen zumindest im Wesentlichen in Art einer Passante zur Öffnung (18) der Transportbüchse (4) ausgerichteten Mittenabschnitt (19b) aufweist, der von zwei gegenüberliegenden Randabschnitten (19a, 19c) begrenzt wird, wobei die beiden Randabschnitte (19a, 19c) in ihrem gegenseitigen Abstand voneinander stetig erweiternd sich von dem Mittenabschnitt (19b) entgegen der Zuführbewegung der Einzelwaren (12.1, 12.2, 12.3, 12.4) des Bundes (8) an die Öffnung (18) der Transportbüchse (4) wegerstrecken.

6. Manipulatorvorrichtung nach Anspruch 5, **dadurch gekennzeichnet, dass** die Abweisekante (19) zumindest im Wesentlichen in Art einer Passante zur Öffnung (18) der Transportbüchse (4) ausgerichtet angeordnet ist.

7. Manipulatorvorrichtung nach einem der Ansprüche 5 bis 6, aufweisend eine Sensoreinrichtung (20), die ausgebildet ist, die Öffnungsebene der Öffnung (18) der Transportbüchse (4) dahingehend zu überwachen, ob sich ein oder mehrere Einzelwaren (12.1, 12.2, 12.3, 12.4) eines in die Transportbüchse (4) eingeschobenen Bundes (8) noch in der Öffnungsebene der Öffnung (18) der Transportbüchse (4) befinden.

## Claims

1. Method for automatically filling a transport box (4) with a bunch (8) of individual articles (12.1, 12.2, 12.3, 12.4) which have been grouped together by means of an article ring (11) to form the bunch (8), comprising the steps of:
- automatically gripping the article ring (11) by means of a gripping tool (10) of an automatically controllable manipulator apparatus (5) such that the article ring (11) is held in place by the gripping tool (10),
- automatically moving the gripping tool (10) along a first movement path (P1) by automatically controlling the manipulator apparatus (5) in such a way that, while the article ring (11) is being held and moved by means of the gripping tool (10), the individual articles (12.1, 12.2, 12.3, 12.4) hanging at the bunch (8) are guided across a restraining device (19) such that the individual articles (12.1, 12.2, 12.3, 12.4) become oriented counter to the movement direction (R1) of the article ring (11) along the first movement path (P1),
- subsequently automatically pushing the bunch (8) into the transport box (4) along a second movement path (P2) by means of the gripping tool (10) by automatically controlling the manipulator apparatus (5) in such a way that the bunch (8) is pushed into the transport box (4) with its article ring (11) in front and the individual articles (12.1, 12.2, 12.3, 12.4) grouped together at the bunch (8) follow the article ring (11) into the transport box (4) in the movement direction (R2) of the article ring (11),
**characterized in that** the automatic movement of the gripping tool (10) along the first movement path (P1) is a pivoting movement about a horizontal pivot axis or about an at least substantially horizontal pivot axis, wherein the article ring (11) is positioned above an open opening (18) of the transport box (4) at the end of the first movement path (P1).

2. Method according to Claim 1, **characterized in that** the automatic movement of the gripping tool (10) along the first movement path (P1) in the form of the pivoting movement about the horizontal pivot axis or about the at least substantially horizontal pivot axis is performed in such a way that, in an initial sequence of the first movement path (P1), the individual articles (12.1, 12.2, 12.3, 12.4) grouped together on the article ring (11) hang vertically downwards due to gravitational force and, in an end sequence of the first movement path (P1), the individual articles (12.1, 12.2, 12.3, 12.4) grouped together on the article ring (11) are brought into a horizontal orientation or into an at least substantially horizontal orientation by means of the restraining device (19) before the article ring (11) is pushed into the transport box (4) along the second movement path (P2).

3. Method according to either of Claims 1 and 2, **characterized in that** the automatic pushing of the bunch (8) into the transport box (4) along the second movement path (P2) is a vertical pushing movement or an at least substantially vertical pushing movement, wherein the transport box (4) is arranged with its open opening (18) below the article ring (11) in such a way that the article ring (11) is pushed, together with the gripping tool (10), into the hollow space (21) of the transport box (4) across the open opening (18) of the transport box (4) in a downward direction counter to the direction of gravitational force and the individual articles (12.1, 12.2, 12.3, 12.4) grouped together at the bunch (8) follow the article ring (11) into the transport box (4) in the downwardly directed movement direction (R2) of the article ring (11).

4. Method according to one of Claims 1 to 3, **characterized in that** the automatic pushing of the bunch (8) into the transport box (4) along the second movement path (P2) is realized in such a way that the article ring (11) is released by the gripping tool (10) when a remaining distance from a bottom wall of the transport box (4), which is situated opposite the opening (18) of the transport box (4), is reached, even before the automatically fed article ring (11) held by the gripping tool (10) makes contact with the bottom wall of the transport box (4).

5. Manipulator apparatus having a gripping tool (10) which is configured for receiving an article ring (11) of a bunch (8) of individual articles (12.1, 12.2, 12.3, 12.4) in an open state of the gripping tool (10) and for holding the article ring (11) of the bunch (8) of individual articles (12.1, 12.2, 12.3, 12.4) on the gripping tool (10) in a closed state of the gripping tool (10), and having an arm (7) with an automatically pivotally mounted base arm (7a) and with a front arm (7b) which is mounted on the base arm (7a) so as to be automatically linearly adjustable and which has the gripping tool (10), having a stationary holder (9) for holding a transport box (4) in place in a vertical orientation, in which an opening (18) of the transport box (4) is arranged so as to be upwardly open, and having a deflecting edge (19) which lies in the opening plane of the opening (18) or lies at least substantially in the opening plane of the opening (18) and which is configured to orient the individual articles (12.1, 12.2, 12.3, 12.4) hanging at the bunch (8) counter to a movement direction (R1) of the article ring (11) along a first movement path (P1) while the article ring (11) is being brought by means of the gripping tool (10) to the opening (18) of the transport box (4) across over the deflecting edge (19), **characterized in that** the deflecting edge (19) has a middle portion (19b) which is oriented at least substantially in the manner of a passing straight line in relation to the opening (18) of the transport box (4) and which is bounded by two oppositely situated edge portions (19a, 19c), wherein the two edge portions (19a, 19c) extend away from the middle portion (19b) counter to the feed movement of the individual articles (12.1, 12.2, 12.3, 12.4) of the bunch (8) to the opening (18) of the transport box (4) so as to widen continuously in terms of their mutual distance from one another.

6. Manipulator apparatus according to Claim 5, **characterized in that** the deflecting edge (19) is arranged so as to be oriented at least substantially in the manner of a passing straight line in relation to the opening (18) of the transport box (4).

7. Manipulator apparatus according to either of Claims 5 and 6, having a sensor device (20) which is configured to monitor the opening plane of the opening (18) of the transport box (4) as to whether one or more individual articles (12.1, 12.2, 12.3, 12.4) of a bunch (8) pushed into the transport box (4) are still in the opening plane of the opening (18) of the transport box (4).

## Revendications

1. Procédé pour remplir automatiquement une boîte de transport (4) avec un paquet (8) de marchandises individuelles (12.1, 12.2, 12.3, 12.4) qui sont regroupées en un paquet (8) au moyen d'un anneau (11) à marchandises, comprenant les étapes suivantes :
- saisie automatique de l'anneau (11) à marchandises au moyen d'un outil de préhension (10) d'un dispositif manipulateur (5) à commande automatique, de sorte que l'anneau (11) à marchandises soit maintenu par l'outil de préhension (10),
- déplacement automatique de l'outil de préhension (10) le long d'un premier chemin de déplacement (P1) par commande automatique du dispositif manipulateur (5) de telle sorte que, pendant le maintien et le déplacement de l'anneau (11) à marchandises au moyen de l'outil de préhension (10), les marchandises individuelles (12.1, 12.2, 12.3, 12.4) suspendues au paquet (8) sont guidées par-dessus un dispositif de retenue (19), de sorte que les marchandises individuelles (12.1, 12.2, 12.3, 12.4) s'alignent le long du premier chemin de déplacement (P1) dans le sens opposé au sens de déplacement (R1) de l'anneau (11) à marchandises,
- ensuite, insertion automatique du paquet (8) dans la boîte de transport (4) au moyen de l'outil de préhension (10) le long d'un deuxième chemin de déplacement (P2) par commande automatique du dispositif manipulateur (5) de telle sorte que le paquet (8) soit inséré dans la boîte de transport (4) avec son anneau (11) à marchandises en avant et que les marchandises individuelles (12.1, 12.2, 12.3, 12.4) regroupées en paquet (8) suivent l'anneau (11) à marchandises dans la boîte de transport (4) dans le sens de déplacement (R2) de l'anneau (11) à marchandises,
**caractérisé en ce que** le mouvement automatique de l'outil de préhension (10) le long du premier chemin de déplacement (P1) est un mouvement de pivotement autour d'un axe de pivotement horizontal ou autour d'un axe de pivotement au moins sensiblement horizontal, l'anneau de produit (11) étant positionné à l'extrémité du premier chemin de déplacement (P1) au-dessus d'une ouverture (18) de la boîte de transport (4).

2. Procédé selon la revendication 1, **caractérisé en ce que** le déplacement automatique de l'outil de préhension (10) le long du premier chemin de déplacement (P1) sous la forme d'un mouvement de pivotement autour de l'axe de pivotement horizontal ou autour de l'axe de pivotement au moins sensiblement horizontal est effectué de telle sorte que dans une séquence initiale du premier chemin de déplacement (P1), les marchandises individuelles (12.1, 12.2, 12.3, 12.4) regroupées sur l'anneau (11) à marchandises pendent verticalement vers le bas en raison de la gravité et que dans une séquence finale du premier chemin de déplacement (P1), les marchandises individuelles (12.1, 12.2, 12.3, 12.4) sont amenées à l'horizontale ou du moins à une orientation essentiellement horizontale au moyen du dispositif de retenue (19), avant que l'anneau (11) à marchandises ne soit inséré dans la boîte de transport (4) le long du deuxième chemin de déplacement (P2).

3. Procédé selon l'une des revendications 1 à 2, **caractérisé en ce que** l'insertion automatique du paquet (8) dans la boîte de transport (4) le long du deuxième chemin de déplacement (P2) est un mouvement de poussée vertical ou un mouvement de poussée au moins essentiellement vertical, la boîte de transport (4), avec son l'ouverture (18), étant disposée sous l'anneau (11) à marchandises de telle sorte que l'anneau (11) à marchandises est poussé avec l'outil de préhension (10) à travers l'ouverture (18) de la boîte de transport (4) dans la cavité (21) de la boîte de transport (4) vers le bas dans le sens opposé à la gravité et que les marchandises individuelles (12.1, 12.2, 12.3, 12.4) regroupées en paquet (8) suivent l'anneau (11) à marchandises dans le sens de déplacement vers le bas (R2) de l'anneau (11) à marchandises dans la boîte de transport (4).

4. Procédé selon l'une des revendications 1 à 3, **caractérisé en ce que** l'insertion automatique du paquet (8) dans la boîte de transport (4) le long du deuxième chemin de déplacement (P2) s'effectue de telle sorte que l'anneau (11) à marchandises est détaché de l'outil de préhension (10) lorsqu'il atteint une distance résiduelle par rapport à une paroi de fond de la boîte de transport (4) opposée à l'ouverture (18) de la boîte de transport (4), avant même que l'anneau (11) à marchandises introduit automatiquement et maintenu par l'outil de préhension (10) ne touche la paroi de fond de la boîte de transport (4).

5. Dispositif manipulateur, comprenant un outil de préhension (10), qui est conçu pour saisir un anneau (11) à marchandises d'un paquet (8) de marchandises individuelles (12.1, 12.2, 12.3, 12.4) dans un état ouvert de l'outil de préhension (10) et pour maintenir l'anneau (11) à marchandises du paquet (8) de marchandises individuelles (12.1, 12.2, 12.3, 12.4) sur l'outil de préhension (10) lorsque l'outil de préhension (10) est fermé, et comprenant un bras (7) avec un bras de base (7a) pivotant automatiquement et un bras avant (7b) réglable automatiquement de manière linéaire sur le bras de base (7a), qui comprend l'outil de préhension (10), comprenant un support fixe (9) pour maintenir une boîte de transport (4) dans une orientation verticale, dans laquelle une ouverture (18) de la boîte de transport (4) est agencée de manière ouverte vers le haut, et comportant un bord de déviation (19) situé dans le plan de l'ouverture (18) ou au moins sensiblement dans le plan de l'ouverture (18), qui est conçu pour orienter les marchandises individuelles (12.1, 12.2, 12.3, 12.4) suspendues dans le paquet (8) le long d'un premier chemin de déplacement (P1) dans le sens opposé au sens de déplacement (R1) de l'anneau (11) à marchandises, pendant que l'anneau (11) à marchandises est amené à l'ouverture (18) de la boîte de transport (4) au moyen de l'outil de préhension (10) par-dessus le bord de déviation (19), **caractérisé en ce que** le bord de déviation (19) présente une portion centrale (19b) orientée au moins essentiellement vers l'ouverture (18) de la boîte de transport (4) à la manière d'un passage, qui est délimitée par deux portions de bord opposées (19a, 19c), les deux portions de bord (19a, 19c) s'écartant de plus en plus l'une de l'autre à partir de la partie centrale (19b) dans le sens opposé au mouvement d'alimentation des marchandises individuelles (12.1, 12.2, 12.3, 12.4) du paquet (8) vers l'ouverture (18) de la boîte de transport (4).

6. Dispositif manipulateur selon la revendication 5, **caractérisé en ce que** le bord de déviation (19) est agencé de manière à être orienté au moins sensiblement à la manière d'un passage vers l'ouverture (18) de la boîte de transport (4).

7. Dispositif manipulateur selon l'une des revendications 5 à 6, comprenant un dispositif de détection (20) qui est conçu pour surveiller le plan d'ouverture de l'ouverture (18) de la boîte de transport (4) pour déterminer si une ou plusieurs marchandises individuelles (12.1, 12.2, 12.3, 12.4) d'un paquet (8) inséré dans la boîte de transport (4) se trouvent encore dans le plan d'ouverture de l'ouverture (18) de la boîte de transport (4).
